Europäisches Patentamt

European Patent Office

Office européen des brevets

(11) Veröffentlichungsnummer: **0 253 110**
**A2**

(12) # EUROPÄISCHE PATENTANMELDUNG

(21) Anmeldenummer: 87107726.9

(51) Int. Cl.⁴ **H04N 7/087**

(22) Anmeldetag: 27.05.87

(30) Priorität: 16.07.86 DE 3623924

(43) Veröffentlichungstag der Anmeldung:
**20.01.88 Patentblatt 88/03**

(84) Benannte Vertragsstaaten:
**AT CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Heider, Peter, Dipl.-Ing Grundig**
**E.M.V.**
**Max Grundig Holländ.Stiftung & Co KG**
**Kurgartenstrasse 37 D-8510 Fürth/Bay(DE)**

(54) **Mikrocomputergesteuerter Videotextdecoder.**

(57) Bei einem Videotextdecoder mit einem Speicher zur Abspeicherung des Inhaltes von n Videotextseiten, einer Einrichtung zur Eingabe von Befehlen, einem Mikrocomputer, der die Auswertung der eingegebenen Befehle und die Speichersteuerung vornimmt, und einem zusätzlichen Speicher wird vorgeschlagen, im zusätzlichen Speicher eine mittels der Einrichtung zur Eingabe von Befehlen programmierbare Übersichtsseite abzuspeichern.

EP 0 253 110 A2

## MIKROCOMPUTERGESTEUERTER VIDEOTEXTDECODER

Die vorliegende Erfindung betrifft einen Videotextdecoder mit einem Speicher zur Abspeicherung des Inhaltes von n Videotextseiten, einer Einrichtung zur Eingabe von Befehlen, einem Mikrocomputer, der die Auswertung der eingegebenen Befehle und die Speichersteuerung vornimmt, und einem zusätzlichen Speicher.

Ein solcher Videotextdecoder ist aus einem in der Zeitschrift IEEE Transactions on Consumer Electronics, Vol. CE-30, No. 3, August 1984, veröffentlichten Artikel von Nabil G. Damouny mit dem Titel "Teletext Decoders - Keeping Up With The Latest Technology Advances" bekannt. Die Figur 10 dieses Artikels zeigt ein Blockschaltbild eines Fernsehempfängers mit den oben genannten Elementen, welche durch einen I²C-Bus miteinander verbunden sind. In Abschnitt 2 ist ferner angegeben, daß der zur Auswertung der eingegebenen Befehle und zur Speichersteuerung vorgesehene Mikrocomputer gleichzeitig auch zur Steuerung anderer Stufen des Fernsehempfängers verwendet werden kann, beispielsweise zur Abstimmung des Fernsehempfängers. Ferner ist angegeben, daß das System auch durch weitere an den I²C-Bus anschließbare Module ergänzt werden kann (siehe beispielsweise Fig. 6).

Der vorliegenden Erfindung liegt die Aufgabe zugrunde, die Bedienungsfreundlichkeit des bekannten Videotextdecoders zu erhöhen.

Diese Aufgabe wird durch die im kennzeichnenden Teil des Anspruchs 1 angegebenen Merkmale gelöst. Vorteilhafte Ausgestaltungen ergeben sich aus den Unteransprüchen.

Die Vorteile der Erfindung liegen insbesondere darin, daß der Benutzer selbst unter Verwendung der Einrichtung zur Eingabe von Befehlen vom Sender unabhängige Übersichtsseiten erstellen kann, anhand derer er die von ihm durchgeführte Speicher-Programmierung kontrollieren und bei Bedarf korrigieren kann. Dies ist insbesondere dann von Bedeutung, wenn (in absehbarer Zukunft) die Anzahl der Videotext anbietenden Sender, insbesondere auch ausländischer Sender, welche beispielsweise via Satellit übertragen werden, sowie privater Sender, und die Anzahl der pro Sender angebotenen Videotextseiten in starkem Maße zunehmen. Weitere vorteilhafte Eigenschaften des beanspruchten Videotextdecoders ergeben sich aus bevorzugten Ausführungsbeispielen, welche im folgenden näher erläutert werden.

Ein erstes bevorzuges Ausführungsbeispiel ist die Einprogrammierung und Abspeicherung einer Übersichtsseite, die Kennungen für die einzelnen Sender enthält. Die Zuordnung der Kennungen zu den einzelnen Sendern kann wie folgt geschehen. Durch Betätigung einer oder mehrerer Taste(n) auf der Fernbedienung wird der Speicherplatz(-Bereich) des zusätzlichen Speichers, der die gewünschte Übersichtsseite enthält, aufgerufen und die Übersichtsseite auf dem Bildschirm des Fernsehempfängers dargestellt. Diese Übersichtsseite kann anfänglich folgendes Aussehen haben:

SENDERKENNUNG ZU PROGRAMMNUMMER

```
    01 ..........
02 ..........
03 ..........
04 ..........
05 ..........
06 ..........
07 ..........
08 ..........
09 ..........
10 ..........
11 ..........
12 ..........
13 ..........
14 ..........
15 ..........
16 ..........
17 ..........
18 ..........
19 ..........
20 ..........
```

Mittels einer Taste der Fernbedienung wird ein Cursor oder eine blinkende Markierung, welche(r) beim Aufruf der Übersichtsseite eventuell automatisch eingeblendet werden kann, an die gewünschte Stelle auf dem Bildschirm verschoben. Dort wird durch Betätigung einer weiteren Taste der Fernbedienung ein gewünschtes Zeichen (Buchstabe, Ziffer, Leerzeichen) erzeugt. Anschließend wird die nächste Stelle auf dem Bildschrim angefahren, u.s.w.. Die Erzeugung des gewünschten Zeichens auf dem Bildschirm kann beispielsweise mittels einer alphanumerischen Tastatur oder unter Verwendung einer von einer Taste der Fernbedienung auslösbaren rollierenden Zeichenfolge, die die Ziffern von 0 bis 9, das Leerzeichen und das gesamte Alphabet zyklisch nacheinander erzeugt, erfolgen.

Die durch freie Programmierung seitens des Benutzers erhaltene Übersichtsseite kann beispielsweise folgendes Aussehen haben:

SENDERKENNUNG ZU PROGRAMMNUMMER

01 ARD
02 ZDF
03 BR 3
04 HE 3
05 OE 1
06 OE 2
07 OE 3
08 SF 1
09 SF 2
10 SF 3
11 DDR
12 DDR
13 DDR
14 SWF 1
15 SWF 2
16 AFN
17 AFN
18 AFN
19 ARD
20 ZDF

Selbstverständlich kann der Benutzer aber auch beliebige andere Kennungen verwenden.

Besonders vorteilhaft ist das Erstellen einer Übersichtsseite mit Senderkennungen auch dann, wenn bestimmte Sender bevorzugt oder gar ausschließlich Sendungen aus bestimmten Themengebieten ausstrahlen, beispielsweise Schulfernsehen, Sport, Musik, usw.. In diesen Fällen kann der Benutzer dem jeweiligen Sender eine Kennung zuordnen, die das jeweilige Themengebiet kennzeichnet, z. B. SCHULE, SPORT, MUSIK, usw..

Ein weiterer bevorzugter Anwendungsfall ist das Erstellen einer Übersichtsseite mit Senderkennungen für Satelliten-Programme. Die Zuordnung der Kennungen zu den einzelnen Satelliten-Sendern-bzw. Programmen geschieht ebenso wie es oben beschrieben wurde.

Ein weiteres bevorzugtes Ausführungsbeispiel ist die Einprogrammierung und Abspeicherung einer Übersichtsseite, die die einprogrammierten Nummern der Videotextseiten enthält. Zur Erläuterung dieses Beispieles sei davon ausgegangen, daß der Videotextdecoder einen Speicher zur Abspeicherung des Inhaltes von n = 8 Videotextseiten habe. Ferner sei davon ausgegangen, daß der Benutzer blockweise vorprogrammiert hat, welche Seite aus dem Videotextangebot in welchem (der 8) Speicher abgelegt sein soll. Bei Anwahl einer Blocknummer speichert der Videotextdecoder automatisch in jedem der 8 Speicher den Inhalt einer Videotextseite ab, die dem jeweiligen Speicher vom Benutzer zugeordnet wurde. Jede dieser 8 Seiten kann bei Bedarf verzögerungsfrei auf dem Bildschirm dargestellt werden. Bisher benötigt der Benutzer ein manuell angefertigtes Verzeichnis darüber, welche Seitennummern er welchem Speicher und welchem Block zugeordnet hat. Dieser Nachteil wird durch die vorliegende Erfindung vermieden, da dieses Verzeichnis in Form einer Übersichtsseite in dem zusätzlichen Speicher, der vorzugsweise als nicht flüchtiger Speicher realisiert wird (z. B. EEPROM), abgespeichert ist und durch Betätigung einer Taste auf der Fernbedienung auf dem Bildschirm dargestellt werden kann. Ein Beispiel für eine solche Übersichtsseite zeigt die folgende Tabelle:

## ZUORDNUNG VON SEITENNUMMER ZU BLOCK UND SPEICHER:

|  | BLOCK 1 | BLOCK 2 | BLOCK 3 | BLOCK 4 |
|---|---|---|---|---|
| SPEICHER M1 | 100 | 300 | 160 | 210 |
| SPEICHER M2 | 114 | 401 | 170 | 220 |
| SPEICHER M3 | 218 | 402 | 175 | 221 |
| SPEICHER M4 | 230 | 403 | 180 | 222 |
| SPEICHER M5 | 231 | 404 | 185 | 223 |
| SPEICHER M6 | 232 | 440 | 195 | 224 |
| SPEICHER M7 | 233 | 441 | 196 | 225 |
| SPEICHER M8 | 234 | 442 | 197 | 226 |

Diese Übersichtsseite kann unter Verwendung des Cursors bzw. der blinkenden Markierung dahingehend umprogrammiert werden, daß jedem Block und jedem Speicher neue Seitennummern zugeordnet werden. Der Programmiervorgang kann so erfolgen, wie es oben beschrieben wurde.

Ein weiteres bevorzugtes Ausführungsbeispiel ist die Einprogrammierung und Abspeicherung einer Übersichtsseite für intern angebotene Servicedienste. Eine solche Übersichtsseite, die durch Betätigung einer bestimmten Taste bzw. Tastenkombination der Fernbedienung auf dem Bildschirm darstellbar ist, hat beispielsweise folgendes Aussehen:

INTERNE SERVICEDIENSTE

UEBERSICHTSSEITE FUER SENDERKENNUNGEN 1
UEBERSICHTSSEITE FUER SAT-KENNUNGEN 2
UEBERSICHTSSEITE FUER PROGR. SEITENNUMMERN 3

Mittels einer solchen Übersichtsseite erhält der Benutzer eine Information darüber, welche internen Servicedienste angeboten werden und welche Taste er betätigen muß, um eine bestimmte, im Rahmen der internen Servicedienste angebotene Übersichtsseite auf dem Bildschirm darstellen zu können.

Eine bevorzugte Weiterbildung der Erfindung besteht darin, die Einblendung der Übersichtsseite automatisch in einer bestimmten Sprache vorzunehmen. Diese ist möglich durch Auswertung der in bekannter Weise in der Kopfzeile einer Videotextseite übertragenen Sprachsteuerbits C 12 bis C 14 der zuletzt betrachteten Videotextseite. Diese Sprachsteuerbits kennzeichnen eine von beispielsweise drei verschiedenen Sprachen und werden üblicherweise dahingehend ausgewertet, daß der der erkannten Sprache zugeordnete Zeichensatz auf dem Bildschirm dargestellt wird. Bei der vorliegenden Weiterbildung der Erfindung werden diese Sprachsteuerbits zusätzlich ausgenutzt, um die Einblendung einer Übersichtsseite immer in derjenigen Sprache durchzuführen, die anhand der Sprachsteuerbits der zuletzt betrachteten Videotextseite erkannt wurde.

Auch die automatische Einblendung einer in einer Statuszeile einer Videotextseite enthaltenen Information in einer bestimmten Sprache ist auf diese Art und Weise möglich.

**Ansprüche**

1. Videotextdecoder mit
-einem Speicher zur Abspeicherung des Inhaltes von n Videotextseiten,
-einer Einrichtung zur Eingabe von Befehlen,
-einem Mikrocomputer, der die Auswertung der eingegebenen Befehle und die Speichersteuerung vornimmt, und
-einem zusätzlichen Speicher,

dadurch gekennzeichnet, daß im zusätzlichen Speicher eine mittels der Einrichtung zur Eingabe von Befehlen frei programmierte, vom Sender unabhängige Information abgespeichert ist, die in Form einer Übersichtsseite auf dem Bildschirm des Fernsehempfängers dargestellt werden kann.

2. Videotextdecoder nach Anspruch 1, dadurch gekennzeichnet, daß die Einrichtung zur Eingabe von Befehlen die Fernbedienung eines Fernsehempfängers ist.

3. Videotextdecoder nach einem der vorhergehenden Ansprüche, dadurch gekennzeichnet, daß die im zusätzlichen Speicher abgespeicherte Information eine Übersichtsseite ist, die frei programmierbare Senderkennungen enthält.

4. Videotextdecoder nach Anspruch 3, dadurch gekennzeichnet, daß die Übersichtsseite Senderkennungen für Satelliten-Programme enthält.

5. Videotextdecoder nach einem der Ansprüche 1 oder 2, dadurch gekennzeichnet, daß die im zusätzlichen Speicher abgespeicherte Information eine Übersichtsseite ist, auf der einprogrammierte Nummern der Videotextseiten aufgelistet sind.

6. Videotextdecoder nach einem der Ansprüche 1 oder 2, dadurch gekennzeichnet, daß die im weiteren Speicher abgespeicherte Information eine Übersichtsseite für intern angebotene Servicedienste ist.

7. Videotextdecoder nach einem der Ansprüche 1 oder 2, dadurch gekennzeichnet, daß er zur Abspeicherung mehrerer Übersichtsseiten ausgebildet ist.

8. Videotextdecoder nach einem der vorhergehenden Ansprüche, dadurch gekennzeichnet, daß die Übersichtsseite automatisch in einer Sprache dargestellt wird, die durch Auswertung der in bekannter Weise in der Kopfzeile einer Videotextseite übertragenen Sprach-Steuerbits der zuletzt betrachteten Videotextseite erkannt wird.